# EUROPÄISCHE PATENTSCHRIFT

(11) **EP 1 701 818 B1**
(45) Veröffentlichungstag und Bekanntmachung des Hinweises auf die Patenterteilung: **28.05.2008**
(21) Anmeldenummer: 04791332.2
(22) Anmeldetag: 28.10.2004
(51) Int. Cl.: B23Q 16/02, B23Q 16/08, B25F 5/00, B23Q 17/22, B27C 5/10

(54) **HANDWERKZEUGMASCHINE MIT MITTELN ZUR AXIAL GROB- UND FEINEINSTELLUNG**
HAND-HELD MACHINE TOOL COMPRISING AN ELEMENT THAT PERMITS AN APPROXIMATE AND PRECISE AXIAL SETTING
MACHINE-OUTIL A MAIN COMPRENANT DES MOYENS POUR LE REGLAGE AXIAL PRECIS ET APPROXIMATIF

(30) Priorität: 18.12.2003 DE 10359420
(43) Veröffentlichungstag der Anmeldung: 20.09.2006
(73) Patentinhaber: ROBERT BOSCH GMBH, 70442 Stuttgart (DE)
(72) Erfinder: CARLSON, Chris, Vernon Hills, Illinois IL 6006 (US); BRAUN, Marco, Penang, 10250 (MY); RAZLAN, Roshilawati, Penang, 11900 (MY); JALIL, Rezwan Iskandar, Simpang Ampat, 14120 (MY); THONG, Wooi Ken, Penang, 11700 (MY)
(74) Vertreter: Daub, Thomas
(86) Internationale Anmeldenummer: PCT/EP2004/052703
(87) Internationale Veröffentlichungsnummer: WO 2005/058542

(56) Entgegenhaltungen:
- DE-A1- 19 637 690
- US-A- 3 991 964
- US-A- 5 913 645
- US-A1- 2002 043 294
- US-A1- 2003 206 779
- US-B1- 6 203 253

## Beschreibung

Die vorliegende Erfindung geht aus von einer Handwerkzeugmaschine nach dem Oberbegriff des Anspruchs 1 bzw. 3 (siehe z.B., US-5,913,645-A).

Aus der Patentschrift DE 196 37 690 C2 ist eine als Oberfräse mit Schnitttiefeneinstellung ausgestaltete Handwerkzeugmaschine bekannt, die ein verhältnismäßig sicheres und bequemes Einstellen der Schnitttiefe erlaubt, wobei jedoch eine Schnellverstellung stufenlos von Hand nicht möglich ist.

### Vorteile der Erfindung

Die vorliegende Erfindung mit den Merkmalen des Anspruchs 1 hat den Vorteil, dass sich damit eine schnelle und präzise Einstellung der Schnitttiefe sicher überprüfbar vornehmen lässt, wobei die dazu vorgesehenen Mittel einfach herstellbar, montierbar, sowie kostengünstig, robust und leicht bedienbar sind.

Dadurch, dass die Stellpositionen zwischen dem Gehäuse und dem Schutzmittel schnell wechselbar sind, ist unverzüglich nach einer schnellen Grobeinstellung eine sichere und genaue Feineinstellung der Schnitttiefenposition möglich.

Dadurch, dass zwischen Gehäuse und Schutzmittel durch eine Relativdrehung die Stellpositionen zwischen Grob- und Feineinstellung wechselbar sind, ist die Handhabung der Schnitttiefeneinstellung besonders einfach und zeitsparend.

Dadurch, dass das Schutzmittel als Stützfuß ausgestaltet ist, der das Gehäuse ringartig umgreift und in zwei bestimmte Drehpositionen umschaltbar ist, die eine Fein- und eine Grobeinstellstufe zum Ändern der Axialposition des Gehäuses gegenüber dem Stützfuß definieren, ist eine einfache und bedienungssichere Umschaltung der Handwerkzeugmaschine bei der Schnitttiefeneinstellung möglich.

Dadurch, dass die zwei Drehpositionen, mit minimalem Drehweg des Gehäuses gegenüber dem Stützfuß, unmittelbar zu einander benachbart überrastend begrenzt sind, ist die Drehposition schnell änderbar einzustellen.

Dadurch, dass Überrastmittel zwischen dem Gehäuse und dem Stützfuß jeden Wechsel der Einstellstufe hörbar und fühlbar machen, sichern sie diesen gegen ungewolltes Verändern sichern.

Dadurch, dass das Gehäuse einen stufenartigen Bund hat, auf den der Stützfuß aufschiebbar ist, wobei die Außenkontur des Gehäuses in die des vollständig aufgeschobenen Stützfußes glatt übergeht, wobei in dieser Position des Gehäuses gegenüber dem Stützfuß die minimale teleskopische Auszugsposition und damit eine maximale Schnitttiefe für das Werkzeug eingestellt ist, ist im Übergangsbereich zwischen Stützfuß und Gehäuse deren gegenseitiges Verdrehen beim Umschaltvorgang durch die Bedienhhand sicher zu spüren und zu kontrollieren.

Dadurch, dass zwischen dem Gehäuse und dem Stützfuß ein Tiefenanschlag angeordnet ist, der in der ersten Einstellstufe nicht und in der zweiten Einstellstufe stellbar zwischen Gehäuse und Stützfuß eingreift, ist in der ersten Einstellstufe eine axiale Grob-Einstellung des Gehäuses gegenüber dem Stützfuß möglich, aus der nach Umschalten in die zweite Einstellstufe die endgültige Schnittiefe durch Drehen des Tiefenanschlags fein einstellbar ist

Dadurch, dass der Tiefenanschlag als Schraubbolzen ausgestaltet ist, an dessen einem Ende drehfest ein Stellrad sitzt, mit dem der Tiefenanschlag drehantreibbar axial gesichert im Stützfuß angeordnet ist, kann er in der Fein-Einstellstufe durch Drehen von Hand das Gehäuse gegenüber dem Stützfuß axial fein verstellen, wobei er in der ersten Einstellstufe ohne Eingriff in das Gehäuse bleibt und darüberhinaus beim Lösen des Gehäuses vom Stützfuß gegen Verlieren gesichert im Stützfuß verbleiben kann.

Dadurch, dass das Stellrad den Stützfuß nach außen handbedienbar durchtritt, wobei der Schraubbolzen längsparallel in einer Nut in einer Innenseite der Wand des Stützfußes formschlüssig annähernd längshälftig einliegt und mit seinem überstehenden Längsbereich auf der gegenüberliegenden Seite einer parallelen äußeren Gehäuselängsnut zugeordnet ist, kann der Tiefenanschlag von außen besonders sicher - ohne Verletzungsgefahr für die Hand des Bedienenden durch das Werkzeug - verstellt werden.

Dadurch, dass neben der einen eine weitere Gehäuselängsnut, insbesondere mit zum Gewinde des Tiefenanschlags passendem Innengewinde, in die der Schraubbolzen längs einlegbar ist, angeordnet ist, ist bei dessen Einlage in der einen Gehäuselängsnut ein Feinverstellen des Gehäuses gegenüber dem Stützfuß möglich und bei Einlegen in der anderen Gehäuselängsnut ein freies axiales Verstellen des Gehäuses gegenüber dem Stützfuß von Hand möglich.

Dadurch, dass der Mittenabstand der Gehäuselängsnuten kleiner ist, als der Nutdurchmesser, ist der Umschaltweg zum Wechseln der Einstellstufen besonders klein.

Dadurch, dass zwischen den Gehäuselängsnuten im Übergang von der einen zur anderen Überrastmittel angeordnet sind, die den Schraubbolzen überrastend in seiner jeweiligen Gehäuselängsnut lagesichern, ist ein ungewolltes Ändern der Einstellstufen ausgeschlossen.

Dadurch, dass eine der Gehäuselängsnuten in den Schraubbolzen eingreifbare, passende Gewindemittel trägt, ist bei Drehen des Schraubbolzens über Betätigen des Stellrades eine reproduzierbare Feinverstellung des Gehäuses gegenüber dem Stützfuß möglich.

Dadurch, dass die andere der Gehäuselängsnuten den Schraubbolzen ohne Eingriff mit Radialspiel umgreift, kann in der zweiten Einstellstufe das Gehäuse gegenüber dem Stützfuß axial zwischen den beiden Endpunkten der Axialposition leicht frei verstellt werden, quasi durch freies axiales Verschieben.

Dadurch, dass sich als Überrastmittel zwischen den Gehäuselängsnuten ein paralleler Bolzen federvorgespannt radialbeweglich nach außen, d.h. zum Stützfuß hin längs gegen den Schraubbolzen des Tiefenanschlags abzustützen sucht, ist ein großflächiges und sicher wirksames Überrastmittel zwischen dem Stützfuß und dem Gehäuse geschaffen.

Dadurch, dass der Bund des Gehäuses und/oder der daran abstützbare obere Rand des hülsenförmigen Schafts des Stützfußes schräg verlaufen, ist das korrekte Wiedereinsetzen des Gehäuses in den Stützfuß nach getrennter Handhabung bedienungssicher. Dadurch, dass die Stellpositionen, insbesondere durch Klemmmittel, lösbar arretierbar und damit axial und radial festlegbar sind, ist die Schnitttiefe der Handwerkzeugmaschine gesichert einstellbar.

Dadurch, dass der Stützfuß so dimensioniert ist, dass die Handwerkzeugmaschine mit dessen Hilfe frei stehend auf einer waagerechten, ebenen Fläche absetzbar ist, ist ein besonders präzises und kippsicheres Arbeiten mit der Handwerkzeugmaschine möglich.

Dadurch, dass das Gehäuse gegenüber dem Stützfuß in seinen axialen Endpositionen bei der Längsverschiebung durch Anschläge begrenzt ist, insbesondere durch eine Bajonettverriegelung, ist ein ungewolltes Lösen oder Verlieren des Stützfußes vom Gehäuse bzw. umgekehrt, ausgeschlossen.

Dadurch, dass zwischen dem Gehäuse und dem Stützfuß Skalenmittel zur Kontrolle der Schnitttiefe angeordnet sind, ist insbesondere in der Feineinstellstufe die Schnitttiefenposition sicher kontrollierbar und reproduzierbar einstellbar.

Dadurch, dass die Handwerkzeugmaschine als Oberfräse ausgestaltet ist und die Einstellpositionen jeweils einer bestimmten Schnitttiefe entsprechen, ist sie besonders zeitsparend einstellbar und sicher handhabbar.

Nachstehend ist die Erfindung anhand eines Ausfiihrungsbeispiels mit zugehörigen Zeichnungen näher erläutert.

Es zeigen
- Figur 1: die Handwerkzeugmaschine von vorn,
- Figur 2: die Handwerkzeugmaschine von links,
- Figur 3: den Stützfuß und die Handwerkzeugmaschine axial auseinandergezogen, explosionsartig dargestellt,
- Figur 4: die Handwerkzeugmaschine ohne den Stützfuß mit Tiefenanschlag,
- Figur 5: den Stützfuß von oben mit Tiefenanschlag,
- Figur 6: einen vergrößerten Querschnitt zwischen Stützfuß und Gehäuse mit Tiefenanschlag in der Feineinstellstufe,
- Figur 7: die Ansicht gemäß Figur 6 in der Grobeinstellstufe und
- Figur 8: eine weitere Seitenansicht des Gehäuses.

### Beschreibung des Ausführungsbeispiels

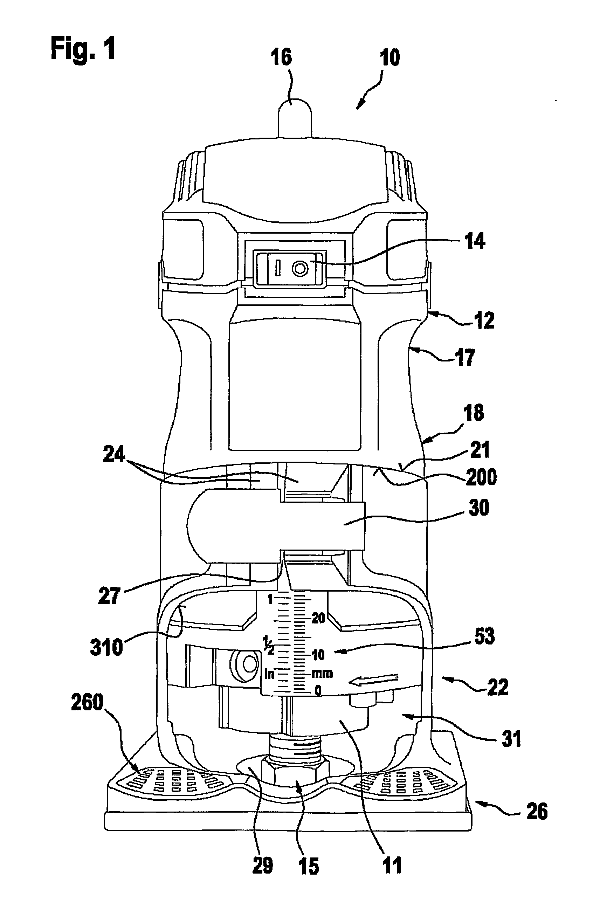

Eine in Figur 1 von vorn gezeigte Handwerkzeugmaschine 10 ist als elektrisch betreibbare Oberfräse ausgestaltet, die aus einem Gehäuse 12 besteht, die vorn eine Schalttaste 14 zum Ein- und Ausschalten enthält und aus dessen unterem freien Ende 11 ein rotierendes Werkzeug 15 zum spanenden Bearbeiten von Werkstücken hervortritt.

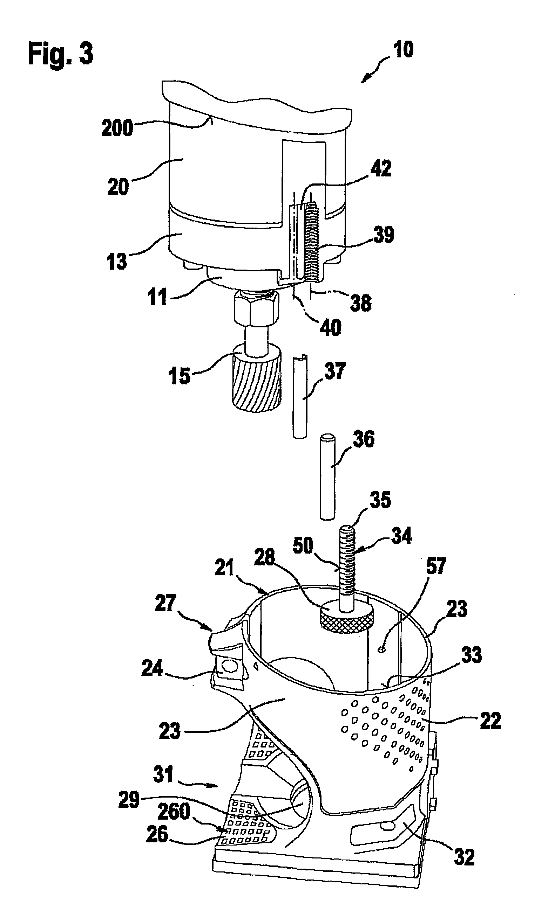

Das zylindrische Gehäuse 12 hat im obersten Viertel seiner Längserstreckung eine Taille 17, die bequem mit einer Hand umfassbar ist und sich mit ihrem radialen Überstand axial abstützend in die haltende Hand schmiegt. Die untere Hälfte des Gehäuses 12 weist einen geringfügig kleineren Außendurchmesser auf, als der obere Bereich und bildet mit dem kleineren Durchmesser einen Bund 20 (Fig. 3), der in einen hohlzylindrischen Stützfuß 22 teleskopartig einschiebbar ist. Der Übergang zwischen dem Bund 20 und dem oberen Bereich des Gehäuses 12 bildet einen Überstand bzw. tastbaren Rand 200

Dieser zwischen dem Bund 20 und dem darüber liegenden Bereich mit dem größeren Durchmesser des Gehäuses 12 liegende Rand 200 verläuft nach hinten - übereinstimmend mit dem oberen Rand des Stützfußes 22 - schräg nach unten geneigt.

Aus dem oberen Gehäusesbereich tritt hinten ein elektrisches Anschlußkabel 16 mit einer leichten Neigung nach oben. Durch seine Austrittsrichtung und Neigung wird es zuverlässig von der Eingriffsstelle des Werkzeugs 15 in ein Werkstück beabstandet gehalten, ohne dabei, wie senkrecht nach oben austretende Kabel die Arbeit zu behindern.

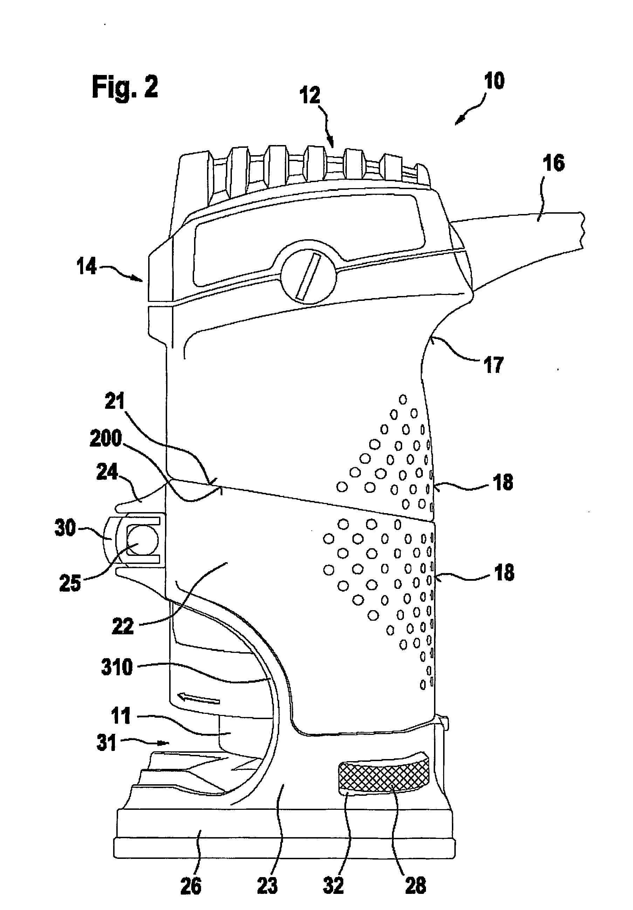

Der hohlzylindrische Stützfuß 22 hat eine vertikale, rohrartige Stützfußwand 23, die vorn längs geschlitzt ist, wobei am Schlitz 27 zwei seitliche, nach vorn überstehende, gelochte Spannlappen 24 gebildet werden. Durch diese hindurch ist quer zur Längsachse des Stützfußes 22 eine Spannschraube 25 (Fig 2) steckbar. Wird diese gespannt, bewegen sich die beiden Spannlappen 24 aufeinander zu und suchen dabei den Schlitz 27 zu schließen. Dabei klemmen sie den Bund 20 des im Stützfuß 22 sitzenden Gehäuses 12 fest - gegen Drehen und Axialverschiebung sicher. Damit ist eine einmal eingestellte Schnitttiefe des Werkzeugs 15 gegen ungewolltes Verändern sicher festgelegt. Die Spannschraube 25 ist eine Schnellspannschraube mit einem Schwenkhebel 30 mit nicht näher bezeichnetem Exzenterbereich, wie beispielsweise zum Einstellen der Sattelhöhe bei Fahrrädern bekannt, und mittels des Schwenkhebels 30 lös- bzw. spannbar. Der Schwenkhebel 30 der Spannschraube 25 ist in gespanntem Zustand an den Stützfuß 22 herangeklappt und weitgehend in dessen Kontur eingezogen. Dadurch ist beim Hantieren mit der Oberfräse 10 z.B. beim Anstoßen an Werkstückkanten ein ungewolltes Aufklappen des Schwenkhebels 30 ausgeschlossen.

Unterhalb der Spannlappen 24 öffnet sich die Stützfußwand 23 über ihre gesamte Breite bis nach unten zur Fußplatte 26 zu einer fensterartigen Frontausnehmung 31. Die Fußplatte 26 am unteren Ende des Stützfußes 22 ist im Wesentlichen quadratisch und steht seitlich, hinten und vorn über die Außenkontur des zylindrischen Stützfußes 22 hinaus. Deren Fläche ist so bemessen, dass die Oberfräse 10 mit dem Stützfuß 22 freistehend sicher und stabil auf einer ebenen Unterlage abstellbar ist.

Die Schnitttiefe für das Werkzeug 15 ist mittels einer Skala 53 am unteren Rand des Gehäuses 12 kontrollierbar einstellbar, wobei die Skalenposition gegenüber dem benachbaren oberen Rand 310 der fensterartigen Frontausnehmung 31 als Bezugskante ablesbar ist.

Die Fußplatte 26 hat einen als kreisrundes Loch ausgestalteten vertikalen Durchbruch 29 zum Durchtritt des Werkzeugs 15 nach unten in ein zu bearbeitendes Werkstück. Durch axiales Verstellen der Oberfräse 10 bzw. des Gehäuses 12 gegenüber dem Stützfuß 22 ist die Eintauchtiefe des Werkzeugs 15 in ein zu bearbeitendes Werkzeug einstellbar.

Außen rückseitig und seitlich sind das Gehäuse 12 und der Stützfuß 22 im Griffbereich 18 mit regelmäßig verteilten, kalottenförmigen Vertiefungen 19 versehen, die etwa einen Durchmesser von 2-3 mm haben und die Griffigkeit und damit die Bediensicherheit der Oberfräse 10 verbessern. Ebenso ist auf der Oberseite der Fußplatte 26 ein Griffbereich mit einer besonders griffsicheren Riffelung 260 aus rechteckigen Einprägungen gebildet.

Figur 2 zeigt die linke Seite der Oberfräse 10, wobei insbesondere - über Figur 1 hinausgehend - das schräg nach oben hinten verlaufende Elektrokabel 16, das oben quer gerippte Gehäuse 12 und die vorn überstehenden Spannlappen 24 mit dem Schwenkhebel 30 erkennbar sind. Außerdem ist der Griffbereich 18 mit den kalottenförmigen Vertiefungen 19 und der schräg nach hinten abfallende Rand 21 des Stützfußes 22 bzw. dementsprechend der überstehende Rand 200 am Bund 20 sowie die Gestalt der Frontausnehmung 31 mit bogenförmig verlaufendem Rand und Übergang in die verhältnismäßig weit nach vorn überstehende Fußplatte 26 erkennbar.

Seitlich hinten ist im unteren Bereich des Stützfußes 22 ein Stellrad 28 erkennbar, das aus einem Querschlitz 32 in der Stützfußwand 23 tritt und - hier nicht sichtbar - einen Gewindebolzen 35 (Fig. 3) trägt, der sich im Inneren zwischen dem Gehäuse 12 und der Stützfußwand 23 erstreckt und als Tiefenanschlag 34 (Figur 3) dient.

Figur 3 zeigt eine Explosionszeichnung mit der oberhalb des Stützfußes 22 positionierten Oberfräse 10, von der nur der untere Bereich mit dem Bund 20, das untere freie Ende 11 sowie das Werkzeug 15 erkennbar sind. Deutlich erkennbar ist der Rand 200 zwischen dem oberen Bereich des Gehäuses 12 und dem Bund 20. Beim Stützfuß 22 ist die Spannschraube 25 demontiert, so dass die Gestaltung der gelochten Spannlappen 24 und der Schlitz 27 zwischen den beiden Spannlappen erkennbar ist. Erkennbar ist auch der obere Rand 21 des Stützfußes 22 sowie der Querschlitz 32 für das Stellrad 28 im unteren Bereich des Stützfußes 22 über der Grundplatte 26. Der Tiefenanschlag 34 mit dem Stellrad 28 ist aus seiner Einlageposition in der Innenfläche der Stützfußwand 23 herausgenommen. Dazu muß zuvor eine von unten mittig in das Stellrad eingreifende, nicht dargestellte Halteschraube entfernt werden, die in der Montageposition den Tiefenanschlag 34 am Stützfuß 22 gegen ungewolltes Lösen sichert.

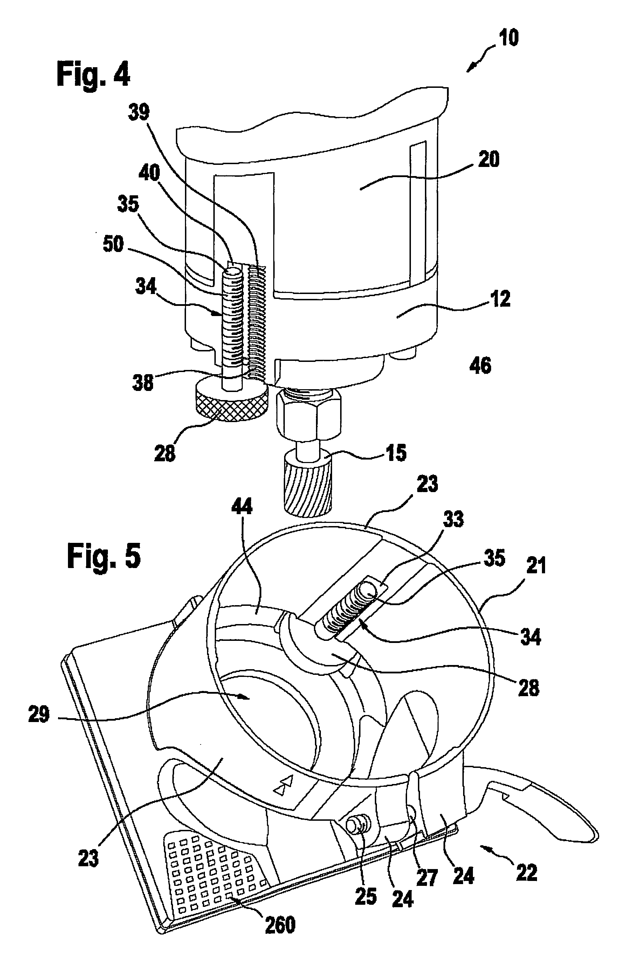

Der Tiefenanschlag 34 ist in seinem oberen Bereich als Schraubbolzen 35 mit einem Gewinde 50 ausgestaltet. Der Schraubbolzen 35 ist zum wahlweisen Eintritt in eine erste oder zweite Gehäuselängsnut 38, 40 in der Außenwand des Gehäuses 12 im Bereich des Bundes 20 vorgesehen. Die beiden Gehäuselängsnuten 38, 40 verlaufen parallel zum Schraubbolzen 35 bzw. zu dessen Längsnut 33 (Fig. 5) in der Innenfläche der Stützfußwand 23. Etwa mittig zwischen und parallel zu den Gehäuselängsnuten 38, 40 ist in einem Schlitz 42 der Gehäusewand 13 im Bereich des Bundes 20 ein Überrastbolzen 36 so eingelegt, dass er radial nach außen durch den entsprechend eng bemessenen Schlitz 42 nicht herausfallen kann, wobei er von hinten durch eine Blattfeder 37 radial nach außen im Schlitz 42 vorgespannt gehalten wird.

Ist das Gehäuse 12 bestimmungsgemäß in den Stützfuß 22 axial teleskopartig eingeschoben, liegt der Schraubbolzen 35 in einer der Längsnuten 38, 40 ein. Soll das Gehäuse 12 gegenüber dem Stützfuß 22 geringfügig so verdreht werden, dass der Schraubbolzen 35 seitlich nach außen aus dem Gehäuselängsnutenpaar 38, 40 hinaustreten soll, ist diese Drehrichtung blockiert. Entgegengesetzt kann jedoch das Gehäuse 12 gegen die Kraft der Blattfeder 37 und des Überrastbolzens 36 verdreht werden, wobei nach entsprechendem Drehweg der Gewindebolzen 35 hörbar in die jeweils benachbarte Gehäuselängsnut 38, 40 einrastet. Dabei muß vor einem Verdrehen des Gehäuses 12 gegenüber dem Stützfuß 22 der Schwenkhebel 30 der Spannschraube 25 in seine Löseposition gebracht werden, damit sich der Schlitz 27 zwischen den Spannlappen 24 öffnet und der Kraftschluss zwischen dem Stützfuß 22 und dem Gehäuse 12 bzw. dem Bund 20 gelöst ist.

Die erste Gehäuselängsnut 38 weist ein Gewinde 39 auf, das zum Gewinde 50 des Schraubbolzens 35 passt. Ist die Gehäuselängsnut 38 im Eingriff mit dem Schraubbolzen 35, so wird bei dessen Drehen bzw. des Stellrades 28 das Gehäuse 12 gegenüber dem Stützfuß 22 axial verstellt. Ist die zweite Gehäuselängsnut 40 im Übergriff mit dem Schraubbolzen 35, wird kein Form- oder Kraftschluss zwischen diesem und dem Gehäuse 12 wirksam. Dadurch ist in dieser Position das Gehäuse 12 gegenüber dem Stützfuß 22 axial von Hand zwischen zwei begrenzten axialen Endpositionen leicht hin- und herschiebbar. In dieser Position ist eine Grobvorwahl der Schnitttiefe durch axiales Schieben einfach und schnell möglich. Nach grob eingestellter Schnitttiefenposition ist das Gehäuse 12 gegenüber dem Stützfuß 22 so zu verdrehen, dass der Schraubbolzen 35 in die erste Gehäuselängsnut 38 überrastend eintritt, so dass in dieser Position durch Drehen des Stellrades 28 die ineinander greifenden Gewinde 39, 50 eine axiale Kraftübertragung mit fein dosierbarer Längsverstellung bewirken. Ist die gewünschte Schnittiefenposition erreicht, wird durch Schwenken des Schwenkhebels 30 in seine Spannposition das Gehäuse 12 gegenüber dem Stützfuß 22 arretiert, so dass weder eine Dreh- noch eine Axialbewegung zwischen diesen beiden Teilen möglich ist. Damit ist die Schnitttiefenposition des Gehäuses 12 gegenüber dem Stützfuß 22 eingestellt. Je nach gewählter Schnitttiefe ragt das Werkzeug 15 mehr oder weniger über die Unterkante der Fußplatte 26 nach außen mit entsprechender Schnitttiefe in ein zu bearbeitendes Werkstück, auf das die Fußplatte 26 aufzusetzen ist.

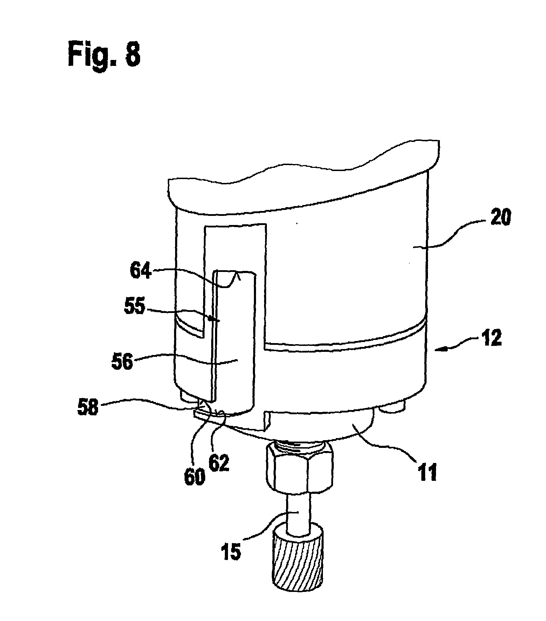

In Betrachtungsrichtung rechts unterhalb des Stellrades 28 ist ein an der Innenseite der Stützfußwand 23 sitzender, radial nach innen ragender Nocken 57 erkennbar, der zum sichernden Eingriff in eine Bajonett-Nut 55 (Figur 8) des Gehäuses 12 vorgesehen ist.

Figur 4 zeigt eine Seitenansicht der Oberfräse 10 im Bereich des Bundes 20 mit einem - zu Demonstrationszwecken - eingelegten Tiefenanschlag 34, der zuvor aus seiner Montagelage im Stützfuß 22 entfernt wurde. Dieser Tiefenanschlag 24 ist in die zweite Gehäuselängsnut ohne Gewinde 40 eingelegt und darin axial frei verschieblich und kann keine Arretier- oder Kraftübertragungsfunktion zwischen dem Stützfuß 22 und dem Gehäuse 12 übernehmen. Dies demonstriert die Grobeinstellungsposition, in der das Gehäuse 12 gegenüber dem Stützfuß 22 begrenzt frei verschieblich ist.

In der zur zweiten Gehäuselängsnut 40 parallelen ersten Gehäuselängsnut 38 ist das Gewinde 39 sichtbar, das bei Eingriff des Tiefenanschlags 34 ein axiales Verschieben zwischen dem Gehäuse 12 und dem Stützfuß 22 durch Kräfte von außen an diesen beiden Teilen verhindert und nur durch Drehen des Stellrades 28 erlaubt.

Die übrigen, zu den vorhergehenden Figuren aufgeführten Einzelheiten sollen - unter Hinweis auf vorhandene, gleiche Bezugszeichen - hier nicht noch einmal wiederholt werden.

Figur 5 zeigt die Einzelheit des Stützfußes 22, wobei über die vorhergehenden Figuren hinausgehend der Tiefenanschlag 34 in seiner Einlageposition an der Innenfläche der Stützfußwand 23 gezeigt ist, wobei der Schraubbolzen 35 in der Längsnut 33 der Stützfußwand 23 axial unverschieblich mit Radialspiel frei drehbar einliegt. Darüberhinaus ist auch der Schlitz 27 zwischen den Spannlappen 24 im Stützfuß 22 deutlich erkennbar.

Die übrigen zu den vorigen Figuren beschriebenen Einzelheiten sollen hier nicht wiederholt werden.

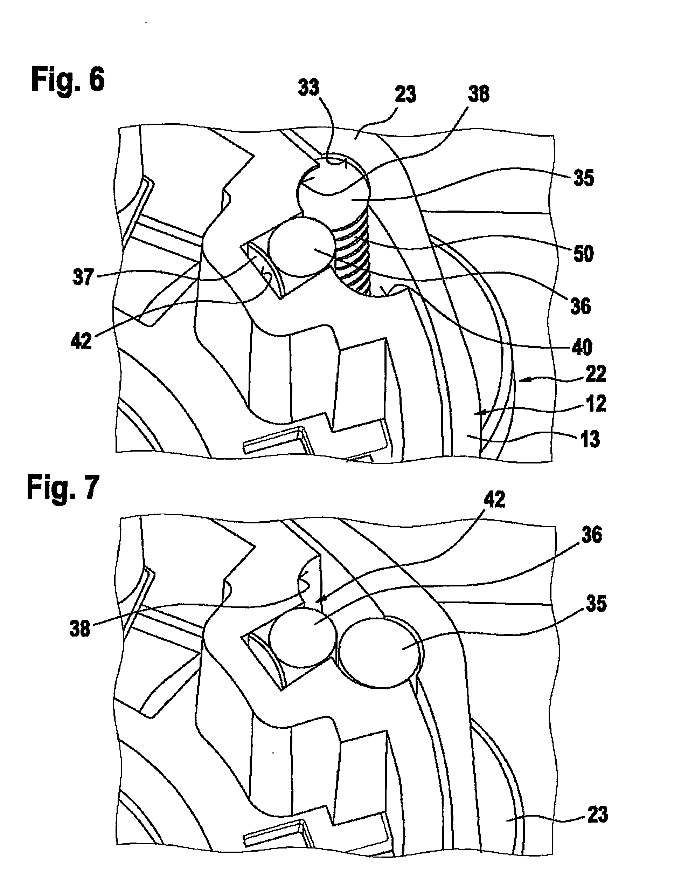

Figur 6 zeigt einen vergrößerten Ausschnitt des Querschnitts zwischen der Stützfußwand 23 und der Gehäusewand 13 im Bereich der Gehäuselängsnuten 38, 40 mit einliegendem Gewindebolzen 35 bzw. auf der Gegenseite die Längsnut 33 in der Stützfußwand 23. Dadurch wird die Überrast- und Wirkungsposition des Schraubbolzens 35 deutlich.

Figur 7 zeigt die gleichen Einzelheiten wie Figur 6 jedoch mit gegenüber dem Stützfuß 22 verdrehtem Gehäuse 12, wobei der Gewindebolzen 35 in der zweiten Gehäuselängsnut 40 einliegt und ein freies Verschieben des Gehäuses 12 gegenüber dem Stützfuß 22 ermöglicht.

Figur 8 zeigt eine weitere Seitenansicht des Gehäuses 12 mit seinem Bund 20 mit Blick auf eine L-förmige Bajonett-Nut 55. Diese setzt sich aus einem oberen, breiten Bereich 56, der senkrecht verläuft und unten in einen schmalen, abgewinkelten Bereich 58 übergeht zusammen. In die Bajonett-Nut 55 greift als Verriegelungs- bzw. Anschlagselement ein Nocken 57, der auf der Innenseite der hohlzlindrischen Stützfußwand 23 (Fig. 9) sitzt und radial nach innen ragt.

Der Nocken 57 wird auf folgende Weise in Eingriff mit der Bajonett-Nut 55 gebracht: Zunächst ist das Gehäuse 12 axial auf den Stützfuß 22 zu setzen. Dabei wird der sich seitlich nach unten öffnende Bereich 58 der Bajonett-Nut 55 über den Nocken 57 geschoben, bis ein weiteres axiales Verschieben des Gehäuses 12 gegenüber dem Stützfuß 22 gestoptt wird, weil der Nocken 57 an der oberen Nutwand 60 des Bereichs 58 anschlägt. Durch entsprechendes Drehen des Gehäuses 12 gegenüber dem Stützfuß 22 wir der Nocken 57 solange an der Nutwand 60 geführt, bis er in den oberen Bereich 56 gelangt.

Ist diese Position des Nockens 57 erreicht, ist das Gehäuse 12 gegenüber dem Stützfuß 22 längs frei verschieblich, solange gleichzeitig der Gewinderbolzen 35 in der zweiten Gehäuselängsnut 40 einliegt. Damit der Nocken 57 das Einstellen der Drehpositionen des Gehäuses 12 gegenüber dem Stützfuß 22 nicht behindert und in jeder Drehposition axial frei beweglich ist, ist der obere Bereich 56 der Bajonett-Nut 55 entsprechend breit ausgeführt.

Zur Begrenzung des Axialbewegung zwischen Stützfuß 22 und Gehäuse 12 dienen ein oberes Nutende 64 und die untere Seitenwand 62 des Bereichs 58 der Bajonett-Nut 55, die zugleich deren äußersten axialen Endpositionen bestimmen und an denen der Nocken 57 in der jeweiligen Endlage anliegt. Dies verhindert ein ungewolltes Lösen des Stützfußes 22 vom Gehäuse 12 bei geöffneter Spannschraube 25.

Zur Erleichterung der Montage des Stützfußes 22 mit dem Gehäuses 12 sind nicht näher bezeichnete pfeilartige Symbole in das Gehäuse 12 bzw. den Stützfuß 22 geprägt, die zueinandergehörige bzw. zueinander auszurichtende Gehäusebereiche erkennbar als solche markieren und zugleich eine vorausgesetzte Montagebewegung beschreiben.

## Patentansprüche

1. Handwerkzeugmaschine mit einem Gehäuse (12) und einem, insbesondere spanenden Werkzeug (15) sowie mit einem das Werkzeug (15) umgreifenden Schutzmittel (22), das mit dem Gehäuse (12) kuppelbar und gegenüber diesem axial einstellbar ist, wobei das Gehäuse (12) und das Schutzmittel (22) in einer ersten Stellposition axial frei und in einer zweiten Stellposition, insbesondere durch Stellmittel geführt, axial feineinstellbar zueinander, insbesondere arretierbar, positionierbar sind, **dadurch gekennzeichnet, dass** die Stellpositionen schnell wechselbar sind durch eine Relativbewegung zwischen dem Schutzmittel (22) und dem Gehäuse (12).

2. Handwerkzeugmaschine nach Anspruch 1, **dadurch gekennzeichnet, dass** die Relativbewegung eine Drehbewegung zwischen dem Schutzmittel (22) und dem Gehäuse (12) ist, insbesondere um einen kleinen Drehweg begrenzt.

3. Handwerkzeugmaschine mit einem Gehäuse (12) und einem, insbesondere spanenden Werkzeug (15) sowie mit einem das Werkzeug (15) umgreifenden Schutzmittel (22), das mit dem Gehäuse (12) kuppelbar und gegenüber diesem axial einstellbar ist, wobei das Schutzmittel (22) als Stützfuß ausgestaltet ist, der das Gehäuse (12) ringartig umgreift, **dadurch gekennzeichnet, dass** der Stützfuß in zwei bestimmte Drehpositionen bringbar ist, die eine Fein- und eine Grob-Einstellstufe zum Ändern der Axialposition des Gehäuses (12) gegenüber dem Stützfuß (22) definieren und die Stellpositionen schnell wechselbar sind durch eine Relativbewegung zwischen dem Schutzmittel (22) und dem Gehäuse (12).

4. Handwerkzeugmaschine nach Anspruch 2, **dadurch gekennzeichnet, dass** die zwei Drehpositionen, insbesondere unmittelbar nebeneinander, mit minimalem Drehweg des Gehäuses (12) gegenüber dem Stützfuß (22), zueinander benachbart, überrastend begrenzt sind.

5. Handwerkzeugmaschine nach Anspruch 2, **dadurch gekennzeichnet, dass** Überrastmittel (36, 37) zwischen dem Gehäuse (12) und dem Stützfuß (22) angeordnet sind, die jede Einstellstufe gegen ungewolltes Verändern sichern.

6. Handwerkzeugmaschine nach einem der vorhergehenden Ansprüche, **dadurch gekennzeichnet, dass** das Gehäuse (12) einen Bund hat, auf den der Stützfuß (22) teleskopartig aufschiebbar ist, wobei die Außenkontur des Gehäuses (12) in die des vollständig aufgeschobenen Stützfußes (22) bündig übergeht, wobei in dieser Position des Gehäuses (12) gegenüber dem Stützfuß (22) die minimale teleskopische Auszugsposition und damit eine maximale Schnitttiefe für das Werkzeug (15) eingestellt ist.

7. Handwerkzeugmaschine nach einem der Ansprüche 1, 3 oder 6, **dadurch gekennzeichnet, dass** zwischen dem Gehäuse (12) und dem Stützfuß (22) ein Tiefenanschlag (34) angeordnet ist, der in der ersten Einstellstufe nicht und in der zweiten Einstellstufe arretierend in das Gehäuse (12) und den Stützfuß (22) eingreift.

8. Handwerkzeugmaschine nach Anspruch 7, **dadurch gekennzeichnet, dass** der Tiefenanschlag (34) als Schraubbolzen ausgestaltet ist, an dessen einem Ende drehfest ein Stellrad (28) sitzt, mit dem der Tiefenanschlag (34) drehbar, axialgesichert im Stützfuß (22) angeordnet ist.

9. Handwerkzeugmaschine nach Anspruch 8, **dadurch gekennzeichnet, dass** das Stellrad (28) den Stützfuß (22), insbesondere dessen hülsenförmige Wand (23), nach außen, insbesondere handbedienbar, durchtritt, wobei der Schraubbolzen (35) in einer längsparallelen Nut (33) in der Innenseite der Wand (23) des Stützfußes (22) formschlüssig, etwa längshälftig einliegt und mit seinem radial überstehenden Längsbereich auf der gegenüberliegenden Seite in einer zur Nut (33) parallelen äußeren Gehäuselängsnut (38) einliegt.

10. Handwerkzeugmaschine nach Anspruch 9, **dadurch gekennzeichnet, dass** neben der einen Gehäuselängsnut (38) eine weitere Gehäuselängsnut (40), insbesondere mit gleichem Krümmungsradius, angeordnet ist, in die der Schraubbolzen (35) längseinlegbar ist.

11. Handwerkzeugmaschine nach Anspruch 10, **dadurch gekennzeichnet, dass** die Gehäuselängsnuten (38, 40) unmittelbar nebeneinander liegen und durch Drehen des Stützfußes (22) relativ zum Gehäuse (12), wahlweise in einen parallelen Übergriff mit dem Schraubbolzen (35) bringbar sind.

12. Handwerkzeugmaschine nach Anspruch 11, **dadurch gekennzeichnet, dass** der Mittenabstand der Gehäuselängsnuten (38, 40) kleiner als deren doppelter Krümmungsradius ist.

13. Handwerkzeugmaschine nach Anspruch 12, **dadurch gekennzeichnet, dass** zwischen den Gehäuselängsnuten (38, 40) Überrastmittel angeordnet sind, die den Schraubbolzen (35) vorgespannt in seiner jeweiligen Gehäuselängsnut (38, 40) lagesicher zu halten suchen.

14. Handwerkzeugmaschine nach Anspruch 13, **dadurch gekennzeichnet, dass** eine der Gehäuselängsnuten (38, 40) in den Schraubbolzen (35) eingreifbare, passende Gewindemittel (50) oder dergl. trägt.

15. Handwerkzeugmaschine nach Anspruch 14, **dadurch gekennzeichnet, dass** die andere der Gehäuselängsnuten (38, 40) den Schraubbolzen (34) berührungsarm umgreift, insbesondere mit Radialspiel.

16. Handwerkzeugmaschine nach Anspruch 15, **dadurch gekennzeichnet, dass** zwischen den Gehäuselängsnuten (38, 40) ein Bolzen (36) als Überrastmittel radial nach außen federvorgespannt, längs gegen den Schraubbolzen (35) abstützbar ist, insbesondere unverlierbar in einem Schlitz der Gehäusewand (13) gehaltert.

17. Handwerkzeugmaschine nach Anspruch 16, **dadurch gekennzeichnet, dass** der Bund (20) des Gehäuses (12) und/oder der daran abstützbare obere Rand (21) des hülsenförmigen Schafts des Stützfußes (22) schräg verlaufen.

18. Handwerkzeugmaschine nach einem der Ansprüche 1 bis 17, **dadurch gekennzeichnet, dass** die Stellpositionen, insbesondere durch Klemmmittel (25, 30), axial und radial festlegbar und lösbar sind.

19. Handwerkzeugmaschine nach einem der Ansprüche 1 bis 18, **dadurch gekennzeichnet, dass** sie mithilfe des Stützfußes (22) frei stehend auf einer waagerechten, ebenen Fläche absetzbar ist.

20. Handwerkzeugmaschine nach einem der vorhergehenden Ansprüche, **dadurch** gehennzeichnet, dass das Gehäuse (12) und der Stützfuß (22), insbesondere durch eine Bajonettverriegelung oder Anschlagmittel, gegen ungewolltes Lösen voneinander gesichert sind.

21. Handwerkzeugmaschine nach einem der vorhergehenden Ansprüche, **dadurch gekennzeichnet, dass** Skalenmittel (53) zwischen Gehäuse (12) und dem Stützfuß (22) zur Anzeige der Schnitttiefe angeordnet sind.

22. Handwerkzeugmaschine nach einem der vorhergehenden Ansprüche, **dadurch gekennzeichnet, dass** sie als Oberfräse ausgestaltet ist und die Einstellpositionen einer bestimmten Schnitttiefe zuordenbar sind.

23. Handwerkzeugmaschine nach einem der vorhergehenden Ansprüche, **dadurch gekennzeichnet, dass** der Stützfuß (22), insbesondere auf der Oberseite seiner Fußplatte (26), mindestens eine Vertiefung mit nach oben stehendem Rand und mit rutschsicherer, insbesondere mit rechteckigen Einprägungen versehener Oberflächenstruktur trägt, die beim Führen und Halten des Stützfußes (22) von Hand bei Fräsarbeiten als Fingerauflage mit Berührungsschutz des Fingers vor dem Werkzeug (15) dient.

24. Handwerkzeugmaschine nach einem der vorhergehenden Ansprüche, **dadurch gekennzeichnet, dass** radial aus dem Gehäuse (12) eine Elektrokabel (16) nach hinten und nach oben abgewinkelt austritt.

## Claims

1. Portable power tool having a housing (12) and a tool (15), in particular a cutting tool (15), and having a protective means (22) which encloses the tool (15) and which can be coupled to the housing (12) and can be set axially relative to the latter, wherein the housing (12) and the protective means (22) can be positioned axially freely in a first adjusting position and, in particular guided by adjusting means, can be positioned in such a way as to be set axially in a precise manner, in particular in a lockable manner, in a second adjusting position, **characterized in that** the adjusting positions can be changed quickly by a relative movement between the protective means (22) and the housing (12).

2. Portable power tool according to Claim 1, **characterized in that** the relative movement limits a rotary movement between the protective means (22) and the housing (12), in particular by a small amount of rotary travel.

3. Portable power tool having a housing (12) and a tool (15), in particular a cutting tool (15), and having a protective means (22) which encloses the tool (15) and which can be coupled to the housing (12) and can be set axially relative to the latter, the protective means (22) being designed as a supporting base which encloses the housing (12) in an annular manner, **characterized in that** the supporting base can be brought into two specific rotary positions which define a fine setting stage and a coarse setting stage for changing the axial position of the housing (12) relative to the supporting base (22), and the adjusting positions can be changed quickly by a relative movement between the protective means (22) and the housing (12).

4. Portable power tool according to Claim 2, **characterized in that** the two rotary positions are limited in an overlatching manner, adjacent to one another, in particular directly next to one another, with minimum rotary travel of the housing (12) relative to the supporting base (22).

5. Portable power tool according to Claim 2, **characterized in that** the overlatching means (36, 37) are arranged between the housing (12) and the supporting base (22), said overlatching means (36, 37) securing each setting stage against unintentional variation.

6. Portable power tool according to one of the preceding claims, **characterized in that** the housing (12) has a collar, onto which the supporting base (22) can be pushed in a telescopic manner, the outer contour of the housing (12) merging into the fully pushed-on supporting base (22) in a flush manner, the minimum telescopic extension position and thus the maximum cutting depth for the tool (15) being set in this position of the housing (12) relative to the supporting base (22).

7. Portable power tool according to one of Claims 1, 3 or 6, **characterized in that** a depth stop (34) is arranged between the housing (12) and the supporting base (22), which depth stop (34) does not engage in the housing (12) and the supporting base (22) in a locking manner in the first setting stage and engages in the housing (12) and the supporting base (22) in a locking manner in the second setting stage.

8. Portable power tool according to Claim 7, **characterized in that** the depth stop (34) is designed as a screw bolt, on the one end of which an adjusting wheel (28) sits in a rotationally fixed manner, with which adjusting wheel (28) the depth stop (34) is arranged in the supporting base (22) in a rotatable, axially secured manner.

9. Portable power tool according to Claim 8, **characterized in that** the adjusting wheel (28) passes outwards through the supporting base (22), in particular its sleeve-shaped wall (23), in particular in such a way as to be manually operable, wherein the screw bolt (35) approximately half rests longitudinally in a positive-locking manner in a longitudinally parallel groove (33) in the inner side of the wall (23) of the supporting base (22) and, with its radially projecting longitudinal region, rests on the opposite side in an outer housing longitudinal groove (38) parallel to the groove (33).

10. Portable power tool according to Claim 9, **characterized in that** there is arranged, in addition to the one housing longitudinal groove (38), a further housing longitudinal groove (40) which in particular has the same radius of curvature and into which the screw bolt (35) can be inserted longitudinally.

11. Portable power tool according to Claim 10, **characterized in that** the housing longitudinal grooves (38, 40) lie directly next to one another and can be optionally brought into parallel overlapping arrangement with the screw bolt (35) by rotating the supporting base (22) relative to the housing (12).

12. Portable power tool according to Claim 11, **characterized in that** the centre distance of the housing longitudinal grooves (38, 40) is less than twice their radius of curvature.

13. Portable power tool according to Claim 12, **characterized in that** overlatching means are arranged between the housing longitudinal grooves (38, 40), said overlatching means attempting to hold the screw bolt (35) in a secure position in its respective housing longitudinal groove (38, 40) in a preloaded manner.

14. Portable power tool according to Claim 13, **characterized in that** one of the housing longitudinal grooves (38, 40) has a suitable screw thread means (39) or the like which can engage with the screw bolt (35).

15. Portable power tool according to Claim 14, **characterized in that** the other housing longitudinal groove (38, 40) encloses the screw bolt (34) with little contact, in particular with radial play.

16. Portable power tool according to Claim 15, **characterized in that** a pin (36), as overlatching means, is spring-preloaded radially outwards between the housing longitudinal grooves (38, 40), along which pin (36) the screw bolt (35) can be supported, in particular is captively retained in a slot of the housing wall (13).

17. Portable power tool according to Claim 16, **characterized in that** the collar (20) of the housing (12) and/or the top edge (21), which can be supported thereon, of the sleeve-shaped shank of the supporting base (22) run/runs obliquely.

18. Portable power tool according to one of Claims 1 to 17, **characterized in that** the adjusting positions can be fixed and released axially and radially, in particular by clamping means (25, 30).

19. Portable power tool according to one of Claims 1 to 18, **characterized in that** it can be set down in a self-supporting manner on a horizontal, flat surface with the aid of the supporting base (22).

20. Portable power tool according to one of the preceding claims, **characterized in that** the housing (12) and the supporting base (22) are secured against unintentional release from one another, in particular by a bayonet lock or stop means.

21. Portable power tool according to one of the preceding claims, **characterized in that** scale means (53) are arranged between housing (12) and supporting base (22) for indicating the cutting depth.

22. Portable power tool according to one of the preceding claims, **characterized in that** it is designed as a router and the setting positions can be assigned to a specific cutting depth.

23. Portable power tool according to one of the preceding claims, **characterized in that** the supporting base (22), in particular on the top side of its base plate (26), has at least one recess having an edge projecting upwards and having a non-slip surface structure which in particular is provided with rectangular embossments and which, when guiding and holding the supporting base (22) by hand during routing work, serves as a finger rest with protection for the finger against accidental contact with the tool (15)

24. Portable power tool according to one of the preceding claims, **characterized in that** an electric cable (16) emerges radially from the housing (12) rearwards and upwards at an angle.

## Revendications

1. Machine-outil à main comportant un boîtier (12) et un moyen de protection (22) entourant l'outil (15), notamment un outil (15) travaillant par enlèvement de copeaux, ce moyen pouvant être couplé au boîtier (12) et être réglé axialement par rapport à celui-ci,
le boîtier (12) et le moyen de protection (22) pouvant être positionnés dans une première position de réglage de manière axialement libre et dans une seconde position de réglage, notamment en étant guidés par des moyens de réglage, suivant un réglage fin, axial, l'un par rapport à l'autre, et notamment être bloqués,
**caractérisée en ce que**
les positions de réglage se changent rapidement par un mouvement relatif entre le moyen de protection (22) et le boîtier (12).

2. Machine-outil à main selon la revendication 1,
**caractérisée en ce que**
le mouvement relatif est un mouvement de rotation entre le moyen de protection (22) et le boîtier (12) et notamment une petite course de rotation.

3. Machine-outil à main comportant un boîtier (12) et un moyen de protection (22) entourant l'outil (15), notamment un outil (15) travaillant avec enlèvement de copeaux, le moyen de protection (22) pouvant être couplé au boîtier (12) et réglable axialement par rapport à celui-ci,
le moyen de protection (22) étant en forme de pied d'appui entourant le boîtier (12) à la manière d'un anneau,
**caractérisée en ce que**
le pied d'appui peut être mis dans deux positions de rotation définies, une position de réglage grossier et une position de réglage fin pour changer la position axiale du boîtier (12) par rapport au pied d'appui (22), de manière définie et les positions de réglage peuvent être changées rapidement par le mouvement relatif entre le moyen de protection (22) et le boîtier (12).

4. Machine-outil à main selon la revendication 2,
**caractérisée en ce que**
les deux positions de rotation, notamment directement voisines, sont délimitées par encliquetage avec une course de rotation minimale du boîtier (12) l'une par rapport à l'autre et vis-à-vis du pied d'appui (22).

5. Machine-outil à main selon la revendication 2,
**caractérisée en ce que**
des moyens d'encliquetage (36, 37) sont prévus entre le boîtier (12) et le pied d'appui (22), ces moyens bloquent chaque niveau de réglage contre toute modification involontaire.

6. Machine-outil à main selon l'une des revendications précédentes,
**caractérisée en ce que**
le boîtier (12) comporte un collier sur lequel le pied d'appui (22) s'engage de manière télescopique,
le contour extérieur du boîtier (12) rejoignant en continuité le pied d'appui (22) complètement engagé et dans cette position du boîtier (12) par rapport au pied d'appui (22), on a réglé la position d'extension télescopique minimale et ainsi la profondeur de coupe maximale pour l'outil (15).

7. Machine-outil à main selon l'une des revendications 1, 3. ou 6,
**caractérisée par**
une butée de profondeur (34) prévue entre le boîtier (12) et le pied d'appui (22), cette butée de profondeur ne pénétrant pas de manière bloquante dans le boîtier (12) et dans le pied d'appui (22) pour le premier niveau de réglage alors qu'elle pénètre de façon bloquante dans le boîtier (12) et le pied d'appui (22) pour le second niveau de réglage.

8. Machine-outil à main selon la revendication 7,
**caractérisée en ce que**
la butée de profondeur (34) est réalisée sous la forme d'un goujon fileté dont une extrémité porte solidairement en rotation une roulette de réglage (28) qui permet de bloquer axialement la butée de profondeur (34), à rotation dans le pied d'appui (22).

9. Machine-outil selon la revendication 8,
**caractérisée en ce que**
la roue de réglage (28) traverse le pied d'appui (22), notamment sa paroi (23) en forme d'enveloppe, pour venir en saillie vers l'extérieur et être accessible à la main,
le goujon fileté (35) étant appliqué sensiblement sur la moitié de sa longueur par une liaison par la forme dans une rainure (33) longitudinale parallèle de la face intérieure de la paroi (23) du pied d'appui (22) et par sa zone de longueur qui dépasse radialement, il vient sur le côté opposé dans une rainure longitudinale (38) extérieure du boîtier, parallèle à la rainure (33).

10. Machine-outil selon la revendication 9,
**caractérisée en ce qu'**
à côté de la rainure longitudinale (38) du boîtier, une autre rainure longitudinale (40) dans le boîtier, notamment de même rayon de courbure, reçoit le goujon fileté (35) dans le sens de la longueur.

11. Machine-outil selon la revendication 10,
**caractérisée en ce que**
les rainures longitudinales (38, 40) du boîtier sont directement juxtaposées et en tournant le pied d'appui (22) par rapport au boîtier (12) on peut les faire correspondre parallèlement au goujon fileté (35).

12. Machine-outil selon la revendication 11,
**caractérisée en ce que**
la distance entre les centres des rainures longitudinales de boîtier (38, 40) est inférieure au double du rayon de courbure.

13. Machine-outil selon la revendication 12,
**caractérisée en ce que**
les moyens d'encliquetage sont prévus entre les rainures longitudinales (38, 40) du boîtier, pour précontraindre le goujon fileté (35) dans la rainure longitudinale respective (38, 40) de boîtier, en le tenant en position.

14. Machine-outil selon la revendication 13,
**caractérisée en ce que**
l'une des rainures longitudinales (38, 40) du boîtier comporte des moyens de filetage (50) adaptés, ou des moyens analogues, susceptibles de pénétrer dans le goujon fileté (35).

15. Machine-outil selon la revendication 14,
**caractérisée en ce que**
l'autre des rainures longitudinales de boîtier (38, 40) entoure le goujon fileté (34) avec un contact réduit, notamment avec du jeu radial.

16. Machine-outil selon la revendication 15,
**caractérisée en ce qu'**
entre les rainures longitudinales de boîtier (38, 40) on a un goujon (36) comme moyen d'encliquetage, précontraint radialement par ressort, vers l'extérieur, et le long duquel le goujon fileté (35) peut s'appuyer et notamment être tenu de manière imperdable dans une fente de la paroi de boîtier (13).

17. Machine-outil selon la revendication 16,
**caractérisée en ce que**
le collier (20) du boîtier (12) et/ou le bord supérieur (21) qui s'appuie contre celui-ci, de la tige en forme de manchon du pied d'appui (22) est incliné.

18. Machine-outil selon l'une des revendications 1 à 17,
**caractérisée en ce que**
les positions de réglage sont fixées axialement et radialement, notamment par des moyens de serrage (25, 30) et ces positions peuvent être ouvertes.

19. Machine-outil selon l'une des revendications 1 à 18,
**caractérisée en ce qu'**
elle peut être appliquée à l'aide du pied d'appui (22) de façon à se tenir librement debout sur une surface horizontale plane.

20. Machine-outil selon l'une des revendications précédentes,
**caractérisée en ce que**
le boîtier (12) et le pied d'appui (22) sont bloqués contre tout détachement accidentel, notamment par un verrouillage de type baïonnette ou des moyens de butée.

21. Machine-outil selon l'une des revendications précédentes,
**caractérisée en ce que**
les moyens formant une graduation (53) sont prévus entre le boîtier (12) et le pied d'appui (22) pour afficher la profondeur de coupe.

22. Machine-outil selon l'une des revendications précédentes,
**caractérisée en ce que**
cette machine est une rainureuse et les positions de réglage sont associées à différentes profondeurs de coupes.

23. Machine-outil selon l'une des revendications précédentes,
**caractérisée en ce que**
le pied d'appui (22) porte notamment sur le côté supérieur de sa plaque d'appui (26), au moins une cavité avec un bord relevé et des empreintes anti-glissement, notamment rectangulaires dans la structure de la surface, cette cavité servant à guider et à tenir le pied d'appui (22) à la main lors des travaux de fraisage, en constituant des appuis pour les doigt avec protection des doigts vis-à-vis de l'outil (15).

24. Machine-outil selon l'une des revendications précédentes,
**caractérisée par**
un câble électrique (16) qui sort radialement du boîtier (12) en étant recourbé vers l'arrière et vers le haut.
